# EUROPÄISCHE PATENTSCHRIFT

(11) **EP 0 750 648 B1**
(45) Veröffentlichungstag und Bekanntmachung des Hinweises auf die Patenterteilung: **10.12.1997**
(21) Anmeldenummer: 95912209.4
(22) Anmeldetag: 06.03.1995
(51) Int. Cl.: C08G 18/08, C08G 18/12, C08G 18/32, C08G 18/76, C08G 18/72, C09J 175/04, C08J 5/12

(54) **Verwendung einer wässrigen Dispersion als Polyurethan-Primer**
Use of an aqueous dispersion as polyurethane primer
Emploi d'une dispersion aqueuse pour couche de fond

(30) Priorität: 14.03.1994 DE 4408487
(43) Veröffentlichungstag der Anmeldung: 02.01.1997
(73) Patentinhaber: Henkel Kommanditgesellschaft auf Aktien, 40191 Düsseldorf (DE)
(72) Erfinder: HOFFMANN, Horst, D-01827 Graupa (DE); KINZELMANN, Hans-Georg, Carry, N.C. 27511-6447 (US); KOHLSTADT, Hans-Peter, D-42549 Velbert (DE)
(86) Internationale Anmeldenummer: EP9500816
(87) Internationale Veröffentlichungsnummer: WO9525138

(56) Entgegenhaltungen:
- EP-A- 0 307 546
- EP-A- 0 369 389
- WO-A-92/16576
- US-A- 4 523 003

## Beschreibung

Die Erfindung betrifft die Verwendung einer wäßrigen Dispersion als Polyurethan-Primer zum Verkleben von Kunststoffen, insbesondere von PVC.

Es ist aus der EP 307 546 bekannt, lösungsmittelfreie wäßrige Polyurethan-Dispersionen als Haftvermittlerbeschichtung für Kunststoff-Folien auf der Basis von Hart- oder Halbhart-PVC zum Kaschieren von porösen Werkstoffen zu verwenden. Außerdem werden auch Dispersionshaftvermittler auf der Basis von Ethylen-Vinylacetat-Copolymeren, Ethylen-Vinylacetat-Kautschuk oder Acrylaten beschrieben. Als Klebstoff wird ein Dispersionsklebstoff genannt. Damit werden Spanplatten und Hart-PVC-Folien miteinander verklebt.

Außerdem ist es allgemein bekannt, daß PVC-Fügeteile miteinander leicht mit einem Diffusions-Klebstoff auf der Basis von Tetrahydrofuran und 10 bis 20 % PVC oder auf der Basis eines Reaktionsklebstoffes wie z.B. Epoxid, Polyurethan, Polymethylmethacrylat oder ungesättigtem Polyester zu verkleben sind (siehe G. Habenicht "Kleben: Grundlagen, Technologie, Anwendungen" (1990), S. 447). Diese Klebstoffe haben jedoch den Nachteil, daß sie Lösungsmittel freisetzen und so die Umwelt gefährden oder daß sie zum Abbinden länger benötigen, als die Maschinentaktzeiten es erlauben. Es ist auch ganz allgemein bekannt, z.B. PVC-Fügeteile oder andere Fügeteile miteinander mit einem Polyurethan-Schmelzklebstoff zu verbinden (siehe Michaeli/Netze/Freitag "Marktspiegel Kunststoffkleben" Verlag TÜV Rheinland (1991), S. 323 und 324). Es ist auch bekannt, PVC-Profile und PVC-Folien mit Hilfe eines Polyurethan-Schmelzklebstoffes zu verkleben. Zur Vorbehandlung wird das Profil mit Chlorkohlenwasserstoffen - z.B. mit Methylenchlorid - behandelt. Auch dieses Klebeverfahren erfordert also Abzüge und gefährdet die Umwelt. Das gilt um so mehr als PVC-Profile wegen ihrer leichten Herstellung nach dem Extrusions-Verfahren, ihren niedrigen Kosten und ihren guten Gebrauchseigenschaften weit verbreitet sind, sei es als Voll-, Hohl- oder Kernprofile. Das dazu zu verwendende PVC kann sowohl Weich- als auch Halbfest- oder Hart-PVC sein. Zur Verbesserung und vor allem zur Verschönerung der Profile wird ihre Oberfläche behandelt. Dies geschieht in der Regel durch Kaschieren mit einer Folie. Diese bestehen vorzugsweise aus PVC und haben in der Regel eine Dicke von 0,1 bis 1,0 mm. Wie bei vielen Verklebungen im industriellen Bereich muß auch die Kaschierung von PVC-Profilen sich nach dem Fabrikationsprozeß richten. Das heißt in der Regel ist eine hohe Anfangsfestigkeit innerhalb kurzer Zeit bei einer noch größeren Endfestigkeit erforderlich.

Ausgehend von diesem Stand der Technik ergab sich als Aufgabe, ein Klebstoffsystem zu finden, das frei von Lösungsmitteln ist und angemessen schnell Kunststoffe, insbesondere PVC-Profile mit PVC-Folien und anderen Kunststoff- sowie Papier-Folien verklebt, so daß die Verarbeitung dadurch nicht verlangsamt wird. Natürlich dürfen auch die Gebrauchseigenschaften darunter nicht leiden.

Die erfindungsgemäße Lösung ist den Ansprüchen zu entnehmen. Sie besteht im wesentlichen in der Auswahl eine speziellen wäßrigen Dispersion als PU-Primer zum Verkleben von Kunststoffen.

Gegenstand des Patents ist also die Verwendung einer wäßrigen Dispersion als Polyurethan-Primer zum Verkleben von Kunststoffen, bei der zumindestens 20 Gew.-% des Polymergehaltes aus einer wäßrigen Dispersion OH-funktioneller Polyurethanprepolymerer stammt, die herstellbar ist durch Umsetzung
- einer Polyesterpolyole enthaltenden Polyolkomponente (I) und
- gegenüber Isocyanaten mindestens zweifach reaktive Verbindungen mit zur Salzbildung befähigten Gruppen (II) mit
- einer zumindest aus 20 Gew.-% Tetramethylxylylendiisocyanat (TMXDI) bestehenden Isocyanatkomponente (III) im stöchiometischen Überschuß,
- anschließendes Dispergieren in Wasser und
- zumindest anteilsweise Umsetzung der verbliebenen NCO-Gruppen mit Aminoalkoholen (IV) sowie
- gewünschtenfalls anschließender Kettenverlängerung, wie in den Patentansprüchen beschrieben.

Der Primer kann bis zu 80 %, bezogen auf den Festkörperanteil Polymere enthalten, die nicht den nachfolgend beschriebenen OH-funktionellen Polyurethanprepolymeren entsprechen,. Besonders geeignet sind hier Polymere auf Basis von Acrylverbindungen, also Acrylate und Methacrylate. Neben den Homopolymeren sind auch Copolymere und Terpolymere geeignet. Auch Polymere anderer Acrylverbindungen wie z.B. Acrylnitril können geeignet sein. Als weitere geeignete Polymere seien insbesondere Vinylacetat, SBR-latices sowie Vinylalkohol genannt. Wenn auch mit einem Polymergehalt von 20 Gew.-% an Polyurethanprepolymeren in der Dispersion gute Ergebnisse erzielt werden können, so ist doch bevorzugt, daß der Gehalt dieser Prepolymeren 50 oder gar 70 Gew.-% übersteigt. In einer besonderen Ausführungsform sind außer den Polyurethanprepolymeren keine anderen Polymeren in der Dispersion vorhanden.

Die in der Polyolkomponente (I) enthaltenen Polyesterpolyole beruhen vorzugsweise zumindest überwiegend auf Adipinsäure und/oder Phthalsäure als Ausgangssubstanz. Auch Mischester der beiden genannten Säuren sind gut geeignet. Besonders geeignet sind reine Polyadipate oder Polyphthalate sowie deren Mischungen. Besonders gute Ergebnisse werden erzielt, wenn darüber hinaus die genannten Polyesterpolyole auf ethersauerstoffhaltigen Glykolhomologen als Alkoholkomponente basieren.

Die genannten Polyesterpolyole sind vorzugsweise in einer Menge von mindestens 50 Gew.-%, bevorzugt mindestens 75 Gew.-%, in (I) enthalten. Besonders vortelhaft ist deren Verwendung ohne nennenswerte weitere Zumischungen. Geeignete Polyesterpolyole sind auch in der DE 37 35 587 beschrieben. Insbesondere sind hier die Homologen gemeint, die sich formal durch Anlagerung von Alkylenoxiden erhalten lassen. Besonders erwähnt seien Addukte des Ethylenoxids, aber auch solchedes Propylenoxids und/oder Butylenoxids. Besonders geeignet ist Diethylenglykol.

Die den erfindungsgemäß eingesetzten Polyurethandispersionen zugrundeliegenden Polyesterpolyole können also bis zu 50 Gew.-%, vorzugsweise jedoch weniger, durch andere in derartigen Zubereitungen übliche Polyole ersetzt sein. Ganz allgemein gilt auch hier - genau wie für die Polyesterpolyole - daß diese anderen Polyole über zumindest zwei gegenüber Isocyanaten reaktionsfähige Wasserstoffatome verfügen müssen und im wesentlichen linear sein sollten. Geeignet sind hier beispielsweise Polyether, Polyacetale, Polycarbonate, Polythioether, Polyamide, Polyesteramide und/oder andere Polyester, die jeweils im Mittel zwei bis höchstens vier reaktive Wasserstoffatome aufweisen. In besonderen Fällen kann es bevorzugt sein, zu den überwiegend difunktionellen Polyolen einen Teil höherfunktioneller Polyole insbesondere trifunktioneller Produkte zuzusetzen. Abhängig von deren Menge läßt sich der Grad der Vorvernetzung variieren.

Unter Polycarbonate werden hier Polyester verstanden, die theoretisch durch Veresterung der Kohlensäure mit zwei- oder mehrwertigen Alkoholen dargestellt werden können, und an beiden Kettenenden jeweils eine Hydroxylgruppe aufweisen. Vorzugsweise besitzen die Alkohole und letztlich damit auch die Polycarbonatdiole einen aliphatischen Aufbau. Geeignete mehrwertige Alkohole können z.B. dreiwertig sein wie etwa das Glycerin. Bevorzugt werden jedoch zweiwertige Alkohole, insbesondere wenn diese nicht weniger als vier und nicht mehr als zehn C-Atome aufweisen. Cyclische und verzweigtkettige Alkohole sind zwar geeignet, jedoch werden lineare bevorzugt. Die Hydroxylgruppen können benachbart, z.B. in 1,2-Stellung, oder auch isoliert angeordnet sein. Bevorzugt werden Diole mit terminalen OH-Gruppen.

Als Polyether seien z.B. die Polymerisationsprodukte des Ethylenoxids, Propylenoxids, Butylenoxids sowie ihre Misch- oder Pfropfpolymerisationsprodukte sowie die durch Kondensation von mehrwertigen Alkoholen oder Mischungen derselben und die durch Alkoxylierung von mehrwertigen Alkoholen, Aminen, Polyaminen und Aminoalkoholen gewonnenen Polyether genannt. Als Polyether sind auch die in der genannten EP 354 471 beschriebenen Polytetrahydrofurane als auch Ethylenglykolendständige Polypropylenglykole geeignet.

Als Polyacetale kommen z.B. die aus Glykolen wie Diethylenglykol, Triethylenglykol, Hexandiol und Formaldehyd herstellbaren Verbindungen in Frage. Auch durch Polymerisation cyclischer Acetale lassen sich geeignete Polyacetale herstellen.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythioether, Polythiomischether, Polythioetherester, Polythioetheresteramide. Derartige Polyhydroxylverbindungen können auch in alkylierter Form bzw. in Mischung mit Alkylierungsmitteln angewandt werden.

Zu den Polyestern, Polyesteramiden und Polyamiden zählen die aus mehrwertigen gesättigten und ungesättigten Carbonsäuren bzw. deren Anhydriden und mehrwertigen gesättigten und ungesättigten Alkoholen, Aminoalkoholen, Diaminen, Polyaminen und ihren Mischungen gewonnenen, überwiegend linearen Kondensate, z.B. Polyterephthalate. Auch Polyester aus Lactonen, z.B. Caprolacton oder aus Hydroxycarbonsäuren sind verwendbar. Die Polyester können Hydroxyl- oder Carboxylendgruppen aufweisen. Zu ihrem Aufbau können als Alkoholkomponente auch höhermolekulare Polymerisate oder Kondensate, wie z.B. Polyether, Polyacetale, Polyoxymethylene (mit)verwendet werden.

Auch bereits Urethan- oder Harnstoffgruppen enthaltende Polyhydroxylverbindungen sowie gegebenenfalls modifizierte natürliche Polyole wie Rizinusöl sind verwendbar. Grundsätzlich kommen auch Polyhydroxylverbindungen, welche basische Stickstoffatome aufweisen, in Frage, z.B. polyalkoxylierte primäre Amine oder Polyester bzw. Polythioether, welche Alkyl-diethanolamin einkondensiert enthalten. Weiterhin eingesetzt werden können Polyole, die durch vollständige oder teilweise Ringöffnung epoxidierter Triglyceride mit primären oder sekundären Hydroxylverbindungen erzeugt werden können, beispielsweise das Umsetzungsprodukt von epoxidiertem Sojaöl mit Methanol. Auch Mischpolymerisate der genannten Polyhydroxyverbindungen können geeignet sein, ebenso wie deren Analoge mit vorzugsweise endständigen Amino- oder Sulfidgruppen.

Die vorstehend genannten Polyole, insbesondere die Polyesterpolyole, besitzen vorzugsweise ein mittleres Molekulargewicht von 300 bis 5000. Als besonders geeignet gilt ein Bereich von 500 bis 3000. Diese Angabe sind zahlengemittelte Molekulargewichtsbereiche, die sich über die OH-Zahl berechnen.

Die mit der Polyolkomponente (I) und der Isocyanatkomponente (III) umgesetzte Komponente (II), auch innerer Emulgator genannt, ist eine Verbindung, die mindestens zwei gegenüber Isocyanaten reaktive Gruppen enthält und darüber hinaus mindestens eine weitere zur Salzbildung befähigte Gruppe. Die zur Salzbildung befähigte Gruppe ist vorzugsweise eine Carbonsäure, eine Sulfonsäure oder eine Ammoniumverbindung. Als solche können eingesetzt werden Dihydroxyoder auch Diaminoverbindungen, die eine ionisierbare Carbonsäure, Sulfonsäure oder Ammoniumgruppe enthalten. Diese Verbindungen können entweder als solche eingesetzt oder in situ hergestellt werden. Bevorzugt sind Carbonsäurederivate, Sulfonsäurediamine und/oder Aminodiole. Um ionisierbare Carbonsäuregruppen tragende Verbindungen in das Polyurethan einzubringen, kann der Fachmann den Polyolen spezielle Dihydroxycarbonsäuren zugeben, die nicht oder nur im untergeordneten Maß zu Nebenreaktionen der Carboxylgruppen mit den Isocyanatgruppen befähigt sind. Dies sind insbesondere Carbonsäurediole, die eine C-Zahl zwischen 4 und 10 aufweisen. Eine bevorzugte Dihydroxycarbonsäure bzw. Carbonsäurediol ist die Dimethylolpropionsäure (DMPA).

Um zur Salzbildung befähigte Sulfonsäuregruppen einzuführen, kann den Polyolen eine Diaminosulfonsäure zugesetzt werden. Beispiele sind 2,4-Dimainobenzolsulfonsäure aber auch die N-(omega-Amino-alkan)-omega'-aminoalkansulfonsäuren, wie sie in der DE 20 35 732 beschrieben sind.

Um zur Salzbildung befähigte Ammoniumgruppen in das Polymere einzufügen, kann auch gemäß der DE 15 95 602 das PolyurethanPrepolymere mit Hilfe eines aliphatischen und aromatischen Diamins so modifiziert werden, daß an den Kettenenden primäre Aminogruppen vorliegen, die dann mit üblichen Alkylierungsmitteln in quartäre Ammoniumverbindungen oder in Aminsalze überführt werden können.

In den erfindungsgemäße eingesetzten Polyurethanprepolymer-Dispersionen liegen die Polymeren vorzugsweise in Salzform vor. Bei den bevorzugten mit Carbonsäuren oder Sulfonsäuren modifizierten Polymeren liegen als Gegenionen vorzugsweise Alkalimetallsalze, Ammoniak oder Amine, d.h. primäre, sekundäre oder tertiäre Amine vor. Bei den kationisch modifizierten Produkten liegen als Gegenionen Säureanionen, z.B. Chlorid, Sulfat oder die Anionen organischer Carbonsäuren vor. Die zur Salzbildung befähigten Gruppen können daher durch die Gegenionen teil- oder vollständig neutralisiert werden. Auch ein Überschuß an Neutralisationsmittel ist möglich.

Als Verbindungen der Komponente (II), die eine ionisierbare Ammoniumgruppe enthalten, können auch Aminodiole, vorzugsweise Diethanolamin, eingesetzt werden. Die als Komponente (II) genannten geeigneten Verbindungen können selbstverständlich auch in Mischung miteinander eingesetzt werden. Derartige Verbindungen sind auch in der GB 2 104 085 und in der DE 36 43 791 beschrieben.

Es wurde gefunden, daß es - neben Faktoren wie Schaumfreiheit, gute Folienbenetzung und gute Trockeneigenschaften - in einer bevorzugten Ausführungsform von Vorteil sein kann, wenn die eingesetzten Polyurethandispersionen so feinteilig sind, optisch opakes System darstellen. Mit zunehmendem Anteil Emulgatoren wie Carbonsäurediolen, insbesondere DMPA ist die Dispersionsfähigkeit steigerbar.

In einer besonderen Ausführungsform beträgt der Gehalt an (II) im Polyurethanprepolymeren 1 bis 13 Gew.-%, insbesondere 2 bis 8 Gew.-%, vorzugsweise 3 Gew.-% bis 6 Gew.-%, bezogen auf den Festkörpergehalt. Eine relativ geringe Menge an Dihydroxycarbonsäuren, insbesondere DMPA, hat den Vorteil, daß bei deren Neutralisation z.B. mit Natronlauge entsprechend geringe Mengen an basischen Salzen entstehen, was sich positiv auf die Lagerstabilität derartiger Systeme auswirken kann. Des weiteren kann u.a. durch den vergleichsweise geringen Anteil an (II) eine relativ gute Wasserfestigkeit des gehärteten Klebstoffs erreicht werden. Gute bis sehr gut Eigenschaften des Systems können insbesondere dann sichergestellt werden, wenn neben den genannten relativ geringen Mengen (II) Polyesterpolyole in (I) enthalten sind, die im wesentlichen auf ethersauerstoffhaltigen Glykolen als Alkoholkomponente basieren. Besonders geeignet sind solche Polyesterpolyole, die zumindest überwiegend auf Diethylenglykol als Diolkomponente basieren.

Die den Polyurethan-Dispersionen zugrunde liegende mehrfunktionelle Isocyanatkomponente besteht ganz oder teilweise aus alpha-alpha-alpha'-alpha'-Tetramethylxylylendiisocyanat (TMXDI). Die meta-isomere Form ist besonders geeignet. Nur mit einem Mindestanteil von etwa 20 Gew.-% an TMXDI in der Isocyanatmischung erhält man einer auf Polyesterpolyolen basierenden Polyolkomponente eine Polyurethandispersion, die erfindungsgemäß als wäßriger Primer verwendet werden kann. Bevorzugt besteht die Isocyanatmischung zu mindestens 30 Gew.-%, besser noch zu mindestens 50 Gew.-%, aus TMXDI. Als Faustregel kann gelten, daß die viskositätsbedingte Handhabbarkeit der Produkte bzw. Zwischenprodukte bei der Herstellung der Polyurethanprepolymeren desto besser ist, je höher der Anteil an TMXDI in der Isocyanatmischung ist. Es werden daher Isocyanatkomponenten (III) bevorzugt, die zur Hälfte oder mehr, etwa zu zwei Dritteln oder drei Vierteln, vorzugsweise ausschließlich, TMXDI enthalten. Für TMXDI findet sich gelegentlich auch die Schreibweise Tetramethylxyloldiisocyanat oder Tetramethylxylendiisocyanat.

Als zusätzlich, also als Rest zu 100 Gew.-%, Polyisocyanate sind alle mehrfunktionellen, aromatischen und aliphatischen Isocyanate geeignet, wie z.B. 1,5-Naphthylendiisocyanat, 4,4'-Diphenylmethandiisocyanat (MDI), hydriertes MDI (H₁₂MDI), Trimethylhexadiisocyanat (TMDI), Xylylendiisocyanat (XDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-iso-cyanato-1,5,5-trimethyl-cyclohexan, chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Polyisocyanate mit reaktionsfähigen Halogenatomen, wie 1-Chlormethylphenyl-2,4-diisocyanat, 1-Bromme-thylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanatmit 1 mol Thioglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäure-diisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell umgesetzte Polyisocyanate.

In einer besonderen Ausführungsform enthält die Isocyanatkomponente anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Technisches Dimerfettsäurediisocyanat besitzt im Mittel mindestens zwei und weniger als drei Isocyanatgruppen pro Molekül Dimerfettsäure.

Die vorgenannten Isocyanate können sowohl jeweils allein als auch in Mischung als Zusatz zu TMXDI eingesetzt werden. Bevorzugt sind - insbesondere cyclische oder verzweigte - aliphatische Diisocyanate, insbesondere Isophorondiisocyanat (IPDI). In Mischung mit TMXDI geeignet sind insbesondere HDI, IPDI, XDI, TMDI, TDI, MDL und/oder H₁₂-MDI. Weitere geeignete Polyisocyanate sind aus der Patentliteratur bekannt, z.B. aus der DE 37 35 587.

Mit den obengenannten Gehalten an TMXDI können die Polyurethanprepolymeren mit einer gegenüber üblichen Verfahren wie z.B. dem Aceton-Verfahren geringeren Menge an Lösungsmitteln hergestellt werden.

In einer besonderen Ausführungsform wird auf Lösemittel bei der Herstellung gänzlich verzichtet. So kann sichergestellt werden, daß die erfindungsgemäße Polymerdispersion lösungsmittelarm, vorzugsweise lösungsmittelfrei, sind.

Vorzugsweise enthalten die geeigneten mehrfunktionellen Isocyanate im Mittel 2 bis höchstens 4 NCO-Gruppen. Die Mengen an der Polyolmischung (I) und an der Mischung mehrfunktioneller Isocyanate (III) werden so gewählt, daß ein bestimmtes Verhältnis von NCO-reaktiven Gruppen zu NCO-Gruppen - NCO/OH-Additionsverhältnis genannt - vorliegt. Bevorzugterweise liegt die Isocyanatkomponente stöchiometrisch im Überschuß vor, übersteigt andererseits aber auch nicht das 2,0-fache an NCO-reaktiven Gruppen. Besonders günstig ist ein Verhältnis gleich oder kleiner als 1,7. Der bevorzugte, hinsichtlich der späteren anwendungstechnischen Ergebnisse optimale Bereich liegt auf jeden FAll oberhalb 1.

Erfindungsgemäß wird das aus der Umsetzung der Komponenten (I), (II) und (III) gebildete Prepolymere mit Aminoalkoholen (IV) zur Reaktion gebracht, so daß zumindest anteilsweise die Umsetzung der im Prepolymeren verbliebenen NCO-Gruppen mit (IV) erfolgt. Zu dieser - auch Rückaddition genannten - Umsetzung der NCO-terminierten Prepolymeren eignen sich insbesondere Aminoalkohole mit primärer oder sekundärer Aminogruppe. Auch Verbindungen mit tertiärer Aminogruppe können geeignet sein. Bevorzugt werden niedermolekulare Aminoalkohole. Besonders geeignet sind solche mit einer Kohlenstoffzahl zwischen 2 und 40, vorzugsweise zwischen 2 und 12. Als geeignete Vertreter seien beispielsweise Ethanolamin, Diethanolamin, N-Butylethanolamin, Neopentanolamin und Diglycolamin sowie Aminozucker genannt. Die Isocyanatgruppen können teilweise oder vollständig mit den genannten Aminoalkoholen umgesetzt werden. Ein bevorzugtes Additionsverhältnis von NCO- zu NHR-Gruppen liegt hier im Bereich von 1 : 1 bis 1 : 0,1, insbesondere 1 : 0,8 bis 1 : 0,2. R steht für Wasserstoff (bevorzugt) oder Alkyl bzw. Aralkyl. Eine besondere Ausführungsform verwendet als (IV) ausschließlich Monoaminoalkohole. Durch die vorgenannte Umsetzung mit (IV) erhält man zumindest anteilsweise anstatt der NCO-Gruppen im Prepolymeren nunmehr unter Ausbildung von Harnstoffgruppierungen polymergebundene Hydroxylgruppen. Dadurch wird eine anschließende Kettenverlängerung ganz oder teilweise unterbunden, ohne Funktionalität einzubüßen. Nach der Einwirkung von (IV) auf die frisch entstandene Dispersion liegt also ein Reaktionsprodukt vor, welches entsprechend der Zusatzmenge (IV), bezogen auf ein Material mit gleichem NCO-Gehalt im ursprünglichen Prepolymeren, welches jedoch kettenverlängert wurde, wesentlich niedriger molekular geblieben ist und eine deutlicher ausgeprägte Klebrigkeit des getrockneten Rückstandes aufweist. Dies gilt insbesondere, wenn Monoaminoalkohole als (IV) eingesetzt wurden. Auf die genannte Art sind vorzugsweise Polyurethanprepolymere herstellbar, die keine reaktiven stickstoffhaltigen Gruppen, insbesondere keine reaktiven Aminooder Semicarbizid-Gruppen enthalten. Gewünschtenfalls kann sich der Umsetzung mit den Aminoalkoholen eine Kettenverlängerung anschließen.

Zu den Kettenverlängerungsmitteln mit reaktionsfähigen Wasserstoffatomen zählen:
- die üblichen gesättigten und ungesättigten Glykole, wie Ethylenglykol oder Kondensate des Ethylenglykols, Butandiol-1,3, Butandiol-1,4, Butendiol, Propandio-1,2, Propandiol-1,3, Neopentylglykol, Hexandiol, Bis-hydroxymethylcyclohexan, Dioxyethoxyhydrochinon, Terephthalsäure-bis-glykolester, Bernsteinsäure-di-2-hydroxyethylamid, Bernsteinsäure-di-N-methyl-(2-hydroxyethyl)amid, 1,4-Di(2-hydroxy-methyl-mercapto)-2,3,5,6-tetrachlorbenzol, 2-Methylenpropandiol-(1,3), 2-Methyl-propandiol-(1,3);
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin;
- Aminoalkohole wie Ethanolamin, Propanolamin, Butanolamin, N-Methyl-ethanolamin, N-Methyl-isopropanolamin;
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren, die isomeren Mono- und Diaminonaphthoesäuren;
- Wasser.

Spezielle Kettenverlängerungsmittel mit mindestens einem basischen Stickstoffatom sind z.B. mono-, bis- oder polyoxalkylierte aliphatische, cycloaliphatische, aromatische oder heterocyclische primäre Amine, wie N-Methyldiethanolamin, N-Ethyl-diethanolamin, N-Propyl-diethanolamin, N-Isopropyl-diethanolamin, N-Butyldiethanolamin, N-Isobutyl-diethanolamin, N-Oleyl-diethanolamin, N-Stearyldiethanolamin, oxethyliertes Kokosfettamin, N-Allyldiethanolamin, N-Methyl-diisopropanolamin, N-Ethyl-diisopropanolamin, N-Propyldiisopropanolamin, N-Butyl-diisopropanolamin, C-Cyclohexyl-diisopropanolamin, N,N-Dioxethylanilin, N,N-Dioxethyltoluidin, N,N-Dioxethyl-1-aminopyridin, N,N'-Dioxethyl-piperazin, Dimethyl-bis-oxethylhydrazin, N,N'-Bis-(2-hydroxy-ethyl)-N,N'-diethyl-hexahydro-p-phenylendiamin, N-12-Hydroxyethyl-piperazin, polyalkoxylierte Amine wie oxypropyliertes Methyl-diethanolamin, ferner Verbindungen wie N-Methyl-N,N-bis-3-aminopropylamin, N-(3-Aminonpropyl)-N,N'-dimethylethylendiamin, N-(3-Aminopropyl)-N-methyl-ethanolamin, N,N'-Bis-(3-aminopropyl)-N,N'-dimethylethylendiamin, N,N'-Bis(3-aminopropyl)-piperazin, N-(2-Aminoethyl)-piperazin, N,N'-Bisoxyethylpropylendiamin, 2,6-Diaminopyridin, Diethanolamino-acetamid, Diethanolamidopropionamid, N,N-Bis-oxyethyl-phenyl-thiosemicarbazid, N,N-Bis-oxethyl-methyl-semicarbazid, p,p'-Bis-aminomethyl-dibenzylmethylamin, 2,6-Diaminopyridin, 2-Dimethylaminomethyl-2-methylpropandiol-1,3.

Kettenverlängerungsmittel mit zur Quaternierung befähigten Halogenatomen bzw. R-SO₂O-Gruppen sind beispielsweise Glycerin-1-chlorhydrin, Glycerinmonotosylat, Pentaerythrit-bis-benzolsulfonat, Glycerin-monomethansulfonat, Addukte aus Diethanolamin und chlormethylierten aromatischen Isocyanaten oder aliphatischen Halogenisocyanaten wie N,N-Bis-hydroxyethyl-N'-m-chlormethylphenylharnstoff, N-Hydroxyethyl-N'-chlorhexylharnstoff, Glycerin-monochlorethylurethan, Bromacetyl-dipropylentriamin, Chloressigsäurediethanolamid. Als Kettenverlängerungsmittel bevorzugt werden kurzkettige gegenüber Isocyanaten reaktive Diamine und/oder Dihydroxy-Verbindungen.

Bei der bevorzugten Kettenverlängerung mit Wasser reagieren die Isocyanatgruppen zunächst mit Wasser und bilden Aminogruppen, die dann ihrerseits mit weiteren Isocyanatgruppen abreagieren. Weitere bevorzugte Kettenverlängerungsmittel sind Polyamine.

Geeignete Herstellverfahren für Polyurethan-Dispersionen sind z.B. in D. Dieterich, Angew. Makromol. Chem. 98, S. 133 (1981), Ullmann, Encyklopädie der technischen Chemie, 4. Auflage, Band 19, Verlag Chemie, Weinheim/Bergstraße 1974, S. 311-313, Houben-Weyl, Methoden der organischen Chemie, Band E 20/Teil 1-3, S. 1659-1663 und S. 1671-1681 sowie in Journal of Waterborne Coating, August 1984, S. 2 ff. beschrieben. Aus den in diesen Artikeln genannten Sekundärliteraturstellen kann sich der geneigte Fachmann auch die entsprechende Patentliteratur erschließen. Geeignete Polyurethandispersionen können, wie aus der bereits genannten EP 354 471 bekannt, nach dem sogenannten Aceton-Verfahren hergestellt werden. Lösemittelzusätze von Niedrigsiedern wie z.B. Aceton sind hier u.a. nötig, um die Viskosität des Prepolymeren zu senken und dieses damit handhabbar zu machen, wodurch die Dispergierung erst möglich wird. Der Nachteil solcher Herstellverfahren ist unter der Berücksichtigung der Forderung nach lösemittelfreien Produkten, das ein technisch aufwendiger Destillationsschritt an das Dispergierverfahren angeschlossen werden muß, um den Niedrigsieder zumindestens überwiegend zu entfernen. Dieses bedeutet einen zusätzlichen Verfahrensschritt, der das Verfahren nicht nur verkompliziert, sondern auch zu einer Verteuerung des Produkts führt. Dies nicht zuletzt deshalb, weil das vorzugsweise eingesetzte Aceton nicht wieder ohne weiteres in den Prozeß rückgeführt werden kann, da vorzugsweise wasserfreies Aceton eingesetzt wird.

Damit ist für den Fachmann u.a. auch die Frage verknüpft, ob und gegebenenfalls bis zu welcher Menge, ein Restlösemittelgehalt akzeptabel ist, da davon der Verfahrensaufwand abhängt. Dem steht allerdings die Forderung nach einem lösungsmittelfreien Produkt entgegen.

Die Polyurethanprepolymeren der vorliegenden Erfindung können lösungsmittelfrei hergestellt werden. Mit anderen Worten, die Umsetzung der genannten Reaktanten (I) bis (IV) zu den Reaktionsprodukten sowie das Dispergieren der Prepolymerphase kann in Abwesenheit inerter Lösungsmittel durchgeführt werden. Dabei wird üblicherweise so verfahre, daß die vorstehend beschriebenen Reaktanten (I) bis (III) bei Raumtemperatur gemischt werden. Im allgemeinen kann die Reaktion in üblichen Kesselanlagen durchgeführt werden. Die Temperatur bei Reaktionsdurchführung liegt etwa zwischen 90 °C und 120 °C. Die Reaktionsmischung kann die für Polyurethanreaktionen wirksame Katalysatorzusätze enthalten. Es wird üblicherweise so lange gerührt, bis sich der gewünschte NCO-Wert einstellt. Nach der Dispergierung in Wassr erfolgt die Umsetzung mit Aminoalkoholen (IV), die zumindest anteilsweise mit den NCO-Gruppen der Prepolymeren abreagieren. Die Reaktion kann nach dem sogenannten 1- aber auch nach dem sogenannten 2-Reaktor-Verfahren durchgeführt werden. Im ersten erfindungsgemäß bevorzugten Fall wird unter Einleitung von Wasser mit der zur Neutralisation gewünschten Basenmenge z.B. Natronlauge unter kräftigem Rühren die Polyurethanprepolymeren dispergiert. Andererseits kann aber auch die Prepolymerphase in die wäßrige Basenlösung eingeleitet und dort unter kräftigem Rühren dispergiert werden. In beiden Fällen kann die Dispergierung bei erhöhten Temperaturen stattfinden. Die Aminoalkohole (IV) können auch mit dem Wasser bzw. mit dem wäßrigen Neutralisationsmittel vermischt mit den NCO-funktionellen Prepolymeren zusammengebracht werden. Gegebenenfalls schließt sich noch eine ein- bis dreistündige Nachrührphase eventuell mit Kettenverlängerung durch Wasser über verbliebene NCO-Gruppen an. Der Festkörpergehalt der Dispersionen kann über einen weiten Bereich, beispielsweise zwischen 25 bis 50 Gew.-% Festkörpergehalt eingestellt werden. Üblicherweise enthalten die als Reaktionskomponente (A) eingesetzten Polyurethandispersionen einen Festkörpergehalt von etwa 40 Gew.-%.

Die vorstehend beschriebenen Polymerdispersionen können zur Bildung eines 2-Komponenten-Reaktivsystems als Reaktivkomponente (B) mehrfunktionelle Verbindungen enthalten, die mit den funktionellen Gruppen der Polyurethanprepolymeren der Reaktivkomponente (A) abreagieren können. Die erfindungsgemäße Harzkomponente (A) kann mit einer relativ breiten Palette von Härtern umgesetzt werden. Beispielsweise seien genannt Isocyanate, Epoxide, Polyethylenimine bzw. Triaceridine und Melamin/Formaldehyd-Systeme. Auch können die gegebenenfalls im Prepolymer enthaltenden Säuregruppen über mehrwertige Ionen, insbesondere mehrwertige Schwermetallionen wie z.B. Zink- oder Zirkonium verbrückt werden. Insofern sind diese mehrwertigen Kationen als mehrfunktionelle Verbindungen zu betrachten. Vorzugsweise enthält die Reaktivkomponente (B) jedoch reaktive mehrfunktionelle organische Verbindungen. Bevorzugt sind mehrfunktionelle Isocyanate oder Epoxide. Von den als Härter geeigneten Substanzen sind solche bevorzugt, die sich in der Harzkomponente (A) feinverteilen, bevorzugt stabil einarbeiten lassen. Im Idealfall können diese Substanzen ebenfalls eine stabile wäßrige Dispersion bilden.

Die reaktiven OH-Endgruppen der Polyurethanprepolymerern sind insbesondere einer Härtung durch Zusatz von Polyisocyanat-Verbindungen zugänglich. Vorzugsweise enthalten die in wäßriger Dispersion der Reaktionskomponente (A) eingesetzten Prepolymeren einen Gehalt an gegen Isocyanaten reaktiven Gruppen - berechnet als OH-Funktionen-von etwa 0,2 bis 1,0 Gew.-%. Besonders geeignet ist ein Bereich von 0,4 bis 0,6 Gew.-%.

Die Reaktivkomponente (B), auch Härter genannt, besteht vorzugsweise zumindest überwiegend aus in Wasser dispergierbaren Polyisocyanaten (V). Derartige Isocyanate sind dem Fachmann bereits bekannt, z.B. aus D. Dieterich, Chemie in unserer Zeit 24, (1990), 135 bis 141. Als besonders geeignete Substanzen seien hier insbesondere wasserdispergierbare aliphatische HDI-Triisocyanurate und HDI-Biurete genannt. Des weiteren kann Triglycidylisocyanurat bevorzugt sein. Geeignet sind auch solche Verbindungen, bei denen festes kristallines Diisocyanat in eine dünne Diffusionssperrschicht eingehüllt ist, die bei Raumtemperatur jede weitere Polyaddition unterbindet. Ein für dieses Verfahren besonders geeignetes Diisocyanat ist das N,N'-bis(2-isocyanatotoluyl)Harnstoff (TDIH), das nach einem Verfahren aus einer Emulsion von Toluylendiisocyanat (TDI) in Wasser hergestellt werden kann. Durch eine besondere Reaktionsführung wird dabei erreicht, daß die endständigen Isocyanatgruppen im inneren der Teilchen intakt bleiben. Erst wenn die Diffusionssperrschicht thermisch oder mechanisch zerstört wird, können dieses Isocyanatgruppen abreagieren, z.B. mit der Reaktivkomponente (A). Im Sinne der Erfindung wird bevorzugt, daß (V) zumindest überwiegend aus HDI-Polyisocyanuraten und/oder HDI-Biuret-Isocyanaten besteht. Das Verhältnis von (A) zu (B) kann über einen weiten Bereich variiert werden. Üblicherweise liegt jedoch (B) im stöchiometrischen Überschuß vor. Ein besonders günstiges filmbildendes Additionsverhältnis erhält man bei einem 1,2- bis 2,5-fachen stöchiometrischen Überschuß an (B).

Das Verfahren zur Herstellung eines 2-Komponenten-Reaktivsystems aus den Komponenten (A) und (B) kennzeichnet sich dadurch, daß die als Härter geeigneten reaktiven mehrfunktionellen Verbindungen in der Harzkomponente (A) feinverteilt, vorzugsweise stabil, dispergiert werden. In einer besonderen Ausführungsform des Verfahrens werden die als Härter geeigneten mehrfunktionellen reaktiven Verbindungen zunächst in einem wäßrigen Medium dispergiert und diese Dispersion anschließend mit der Harzkomponente (A) innig vermengt. Bevorzugt werden bei den vorstehend beschriebenen Verfahren mehrfunktionelle Isocyanate eingesetzt, insbesondere solche, die in Wasser stabil dispergierbar sind.

Da auch die Reaktivkomponente (B) vorzugsweise ohne Lösungsmittel in wäßrigem Medium dispergiert werden kann, ist es möglich ein gänzlich lösungsmittelfreies 2-Komponenten-Reaktivsystem zur Verfügung zu stellen. Die erfindungsgemäßen Dispersionen können außer den bereits genannten Bestandteilen übliche, dem Fachmann für Polymerdispersionen bekannte Additive als Katalysatoren, Netzmittel, Entschäumer, Verlaufshilfsmittel, Füllstoffe, Pigmente, Farbstoffe, Verdickungsmittel und dergleichen enthalten.

Die beschrieben Polyurethan-Dispersionen sind Gegenstand der DE 41 09 477. Dort wird auch ihre Verwendung als 2-Komponenten-Reaktivsystem zum Kleben und Beschichten beschrieben. Es gibt jedoch keinen Hinweis darauf, die Harzkomponente oder das 2-Komponenten-Reaktivsystem als Primer für Kunststoffe zu verwenden. Vorzugsweise sind sie als Primer für PVC-Profile im Durchlaufverfahren geeignet. Die so vorbehandelten Kunststoffoberflächen können dann nach der Trocknung und gegebenenfalls Lagerung mit anderen Kunststoffen, insbesondere Kunststoff-Folien verklebt werden, indem ein Polyurethan-Schmelzklebstoff auf die Folie aufgetragen wird und beides dann auf die geprimerte Oberfläche aufgedrückt wird. Die Polyurethan-Dispersion kann mit Wasser beliebig verdünnt werden, z.B. um eine gute Verarbeitung durch niedrige Viskosität zu ermöglichen. Man kann den Primer auf die Kunststoffoberflächen aufsprühen, aufpinseln, aufwalzen, aufrakeln oder mit Hilfe von Filzen auftragen. Die Auftragsmenge des Primers sollte zwischen 3 und 50 g/m² liegen (Naßauftrag). Nach dem Auftrag des Primers wird die Kunststoffoberfläche getrocknet. Dies geschieht emtweder durch Lagerung bei Raumtemperatur oder durch Einsatz von Heißluft-Gebläsen, Trockenschränken oder Infrarot-Geräten. Vorzugsweise wird die geprimerte Oberfläche direkt nach der Trocknung verklebt. Es ist aber auch möglich, mehrere Tage später zu verkleben.

Prinzipiell sind alle PVC-Profile dieser Behandlung zugänglich sowohl was ihre Kontur betrifft als auch der Grad ihrer Härte. Bevorzugt werden jedoch halbharte und harte PVC-Profile, wie sie zum Bau von Fenstern und Türen verwendet werden.

Zweckmäßigerweise wird ein reaktiver Polyurethan-Schmelzklebstoff verwendet. Bei dem reaktiven Polyurethan-Schmelzklebstoff handelt es sich vorzugsweise um einen feuchtigkeitshärtenden Polyurethan-Schmelzklebstoff der im wesentlichen durch die Umsetzung einer NCO-Gruppen enthaltenden Komponente mit eine Hydroxyl-Gruppen enthaltenden Komponente aus einem Polyether, Polyester und/oder Polyetherester sowie einem niedermolekularen Polyol erhalten wird.

Es genügt, nur ein Fügeteil, insbesondere das PVC-Profil einer Behandlung mit dem Primer zu unterziehen. Ebenso genügt es, den Schmelzklebstoff auf nur ein Fügeteil aufzubringen, sei es auf das Profil oder auf die Folie. Der Klebstoff kann natürlich auch auf beide Fügeteile aufgetragen werden, sowie natürlich auch "in-line".

Um einen möglichst guten Effekt zu erzielen, ist es zweckmäßig, das Profil mit dem Primer zu behandeln und auf die Folie den Klebstoff aufzutragen, so daß unmittelbar nach der Behandlung durch Zusammenpressen der Folie und des Profils die Verklebung in einer einzigen Maschine erfolgen kann, z.B. in Kaschieranlagen und Ummantelungsanlagen. Es ist aber auch möglich, die Verklebung deutlich nach der Primer- Behandlung des Profils vorzunehmen. Die dazwischen liegende Zeit kann eine Woche und mehr sein. Die Verarbeitungstemperatur des Klebstoffes liegt vorzugsweise bei 100 bis 130 °C.

An die Folie werden keine besonderen Anforderungen gestellt, weder was die Dicke noch was das Material betrifft. Neben PVC kommen noch u.a. folgende Polymere in Frage: Polyester, Polyolefine und Polymethylmethacrylate.

Das Verfahren unter Anwendung des erfindungsgemäßen PU-Primers zur Herstellung eines PVC-Profils, das mit einer PVC-Folie beschichtet ist, besteht in
a) einer Primer-Behandlung des PVC-Profils,
b) dem Auftrag eines reaktiven Polyurethan-Schmelzklebstoffes auf das PVC-Profil, die PVC-Folie oder auf beides und
c) Aufkalandrieren der PVC-Folie.

Durch die erfindungsgemäße Verwendung können Kunststoff-Profile erhalten werden, bei denen sich die PVC-Folie nach 7 Tagen Härtung nicht mehr ohne Zerstörung entfernen läßt. Darüber hinaus ist die Härtung der Folie direkt nach der Verklebung gleichmäßig und so stark, daß sie sich nur schwer abziehen läßt.

Die Erfindung wird nun anhand von Beispielen im einzelnen beschrieben:

### Beispiele

### Beispiele 1 bis 3

- Primer A =: erfindungsgemäßer Primer
- Primer B =: Vergleichsprimer auf Basis einer Polyurethandispersion
- Primer C =: Vergleichsprimer auf Basis eines Vinylacetat-Vinylether-Acrylat-Terpolymerisates und eines Vinylacetat-Ethylen-Acrylsäure-Ester-Terpolymeri sates.

Der Primer A wurde folgendermaßen hergestellt: 13,88 Gew.-Teile eines linearen Polyesters (bestehend aus den Komponenten Adipinsäure, Isophthalsäure und Diethylenglykol) mit der OH-Zahl 57,5 mg KOH/g werden mit 5,94 Gew.-Teilen eines linearen Polyesters (Adipinsäure, Neopentylglykol, Diethylenglykol, Hexandiol-1,6 mit OHZ = 61,5), 1,18 Gew.-Teile Dimethylolpropionsäure (DMPA) und 5,84 Gew.-Teilen m-Tetramethylxylylendiisocyanat (m-TMXDI) bei max. 110 °C zur Reaktion gebracht. Sobald ein NCO-Gehalt von 1,5 % erreicht ist, wird das Prepolymer in 42,00 Gew.-Teilen Wasser mit 0,84 Gew.-Teilen Triethylamin bei 70 bis 80 °C dispergiert und anschließend sofort 0,30 Gew.-Teile Monoethanolamin zugegeben. Eine weitere Kettenverlängerung erfolgt unter Rühren in 2 Stunden bei 80 °C. Die Dispersion wird auf RT abgekühlt.

| | |
|---|---|
| Festkörper | 40 %, |
| pH | ca. 7, |
| Viskosität | 16 sec., DIN-Becher 4 mm, 20 °C. |

Zu 100 Gew.-Teilen dieser Polyurethan-Dispersion werden 6 Gew.-Teile eines in Wasser emulgierbaren HDI-Biurets homogen zugemischt.

Dieser Primer wurde mit einem Filz auf ein 250 x 50 mm großes PVC-Fensterprofil aufgetragen. Die Auftragsmenge des Primers beträgt 5 bis 20 g/m² (naß). Mittels eines Heißluft-Aggregates werden die Primerschichten getrocknet. Anschließend wird mit einem Beschichtungsgerät ein feuchtigkeitshärtender Polyurethan-Schmelzklebstoff auf eine PVC-Folie aufgetragen. Die Beschichtungsmenge betrug 40 bis 50 g/m², die Temperatur des Klebstoffs 110 bis 120 °C. Die klebstoffbeschichtete Folie wird sofort auf das geprimerte Profil gedrückt und so verklebt.
Zur Beurteilung der Verklebung wird an einem 20 mm breiten Streifen die Schälfestigkeit nach DIN 53530 nach einer Härtungszeit von 1, 3 und 7 Tagen bestimmt, und zwar bei einem Schälwinkel von 90 ° und einer Abzugsgeschwindigkeit von 50 mm/min.

| | | Schälfestigkeit [N/mm] | | |
|---|---|---|---|---|
| Beispiel | Primer | 1 Tag | 3 Tage | 7 Tage |
| 1 | A | 2,1 | 2,4 | > 5,0 (MB) |
| 2 | B | 0,8 | 0,8 | 0,9 |
| 3 | C | 0,6 | 0,9 | 1,0 |

| | | | | |
|---|---|---|---|---|
| MB = Materialbruch der Folie; Verklebung unbeschädigt. | | | | |

### Beispiele 4 und 5

Es wird mit den Primern A und B, wie in den.Beispielen 1 bis 3 beschrieben, gearbeitet. Allerdings wird die Verklebung der Folie mit dem Polyurethan-Schmelzklebstoff nicht sofort vorgenommen, sondern erst 4 Tage nach dem Primer-Auftrag. Die Trocknung des Primers erfolgt während dieser Zeit bei Raumtemperatur. An diesen Verklebungen wurden folgende Schälfestigkeiten gemessen:

| | | Schälfestigkeit [N/mm] | | |
|---|---|---|---|---|
| Beispiel | Primer | 1 Tag | 3 Tage | 7 Tage |
| 4 | A | 1,05 | 2,6 | 3,1 |
| 5 | B | 0,6 | keine Haftung | - |

In den Beispielen 6 und 7 wurde der Primer A folgendermaßen variiert: In beiden Fällen wurde die OH-terminierte Polyurethan-Dispersion nicht mehr mit dem Polyisocyanat HDI-Biuret umgesetzt (Primer A2). Außerdem wurden im Falle des Primers A1 70 Gew.-Teile der wäßrigen Dispersion der OH-terminierten Polyurethane mit 30 Gew.-Teilen einer 50 %igen Dispersion auf Basis von Acrylsäureestern-Copolymeren unter Zusatz von 0,04 % Entschäumer gemischt.

Die Auftragsmenge der Primer beträgt 10 bis 20 g/cm² (naß). Mittels eines Heißluft-Gebläses wird die Primerschicht getrocknet. Die Klebstoffbeschichtung und Verklebung erfolgten, wie in den Beispielen 1 bis 5 beschrieben. Folgende Schälfestigkeiten werden in Abhängigkeit von der Aushärtungszeit gemessen:

| | | Schälfestigkeit [N/mm] | | |
|---|---|---|---|---|
| Beispiel | Primer | 1 Tag | 3 Tage | 7 Tage |
| 6 | A1 | 1,1 | 2,1 | 3,4 |
| 7 | A2 | 2,1 | 2,9 | 3,7 |
| | | | | teilweiser Materialbruch |

## Patentansprüche

1. Verwendung einer wäßrigen Dispersion, bei der mindestens 20 Gew.-% des Polymergehaltes aus einer wäßrigen Dispersion OH-funktioneller Polyurethanprepolymerer stammt, die herstellbar ist durch Umsetzung
- einer Polyesterpolyole enthaltenden Polyolkomponente (I) und
- gegenüber Isocyanaten mindestens zweifach reaktive Verbindungen mit zur Salzbildung befähigten Gruppen (II) mit
- einer zumindest aus 20 Gew.-% Tetramethylxylylendiisocyanat (TMXDI) bestehenden Isocyanatkomponente (III) im stöchiometischen Überschuß,
- anschließendes Dispergieren in Wasser und
- zumindest anteilsweise Umsetzung der verbliebenen NCO-Gruppen mit Aminoalkoholen (IV) sowie
- gewünschtenfalls anschließender Kettenverlängerung,
als Polyurethan-Primer zum Verkleben von Kunststoffen.

2. Verwendung nach Anspruch 1, dadurch gekennzeichnet, daß die in der Polyolkomponente (I) enthaltenen Polyesterpolyole auf Adipinsäure und/oder Phthalsäure als Säurekomponente basieren.

3. Verwendung nach mindestens einem der vorstehenden Ansprüche, dadurch gekennzeichnet, daß die zur Herstellung der Polyurethanprepolymeren eingesetzten Polyesterpolyole ein zahlengemitteltes Molekulargewicht von 300 bis 5000 aufweisen.

4. Verwendung nach mindestens einem der vorstehenden Ansprüche, dadurch gekennzeichnet, daß (II) zumindest überwiegend aus Dimethylolpropionsäure (DMPA) besteht.

5. Verwendung nach mindestens einem der vorstehenden Ansprüche, dadurch gekennzeichnet, daß die Isocyanatkomponente (III) mindestens 30 Gew.-%. enthält.

6. Verwendung nach mindestens einem der vorstehenden Ansprüche, dadurch gekennzeichnet, daß sie lösungsmittelarm ist.

7. Verwendung nach mindestens einem der vorstehenden Ansprüche, dadurch gekennzeichnet, daß bei der Umsetzung von (I) und (II) mit (III) das NCO/OH-Additionsverhältnis gleich oder kleiner 2,0, jedoch größer 1 ist.

8. Verwendung nach mindestens einem der vorstehenden Ansprüche, dadurch gekennzeichnet, daß (IV) aus Monoaminoalkohlen besteht.

9. Verwendung nach mindestens einem der vorstehenden Ansprüche, dadurch gekennzeichnet, daß der Gehalt an (II) in den Polyurethanprepolymeren 1 bis 13 Gew.-%, bezogen auf Festkörpergehalt, ist.

10. Verwendung nach mindestens einem der vorstehenden Ansprüche, dadurch gekennzeichnet, daß bei der Umsetzung der NCO-Gruppen mit den Aminoalkoholen (IV) das NCO/NHR-Additionsverhältnis im Bereich von 1 : 1 bis 1 : 0,1 liegt.

11. Verwendung nach mindestens einem der vorstehenden Ansprüche, dadurch gekennzeichnet, daß eine Kettenverlängerung durch Wasser und/oder mittels Polyaminen erfolgt.

12. Verwendung nach mindestens einem der vorstehenden Ansprüche, dadurch gekennzeichnet, daß zur Bildung eines 2-Komponenten-Reaktivsystems als Reaktivkomponente (B) mehrfunktionelle Verbindungen enthalten sind, die mit den funktionellen Gruppen der in den vorstehenden Ansprüchen definierten OH-funktionellen Polyurethanprepolymeren der Reaktivkomponente (A) abreagieren können.

13. Verwendung nach mindestens einem der vorstehenden Ansprüche, dadurch gekennzeichnet, daß die Isocyanate zumindest überwiegend aus HDI-Polyisocyanuraten und/oder HDI-Biuret-Isocyanaten bestehen.

14. Verwendung nach mindestens einem der vorstehenden Ansprüche, dadurch gekennzeichnet, daß (B) im Verhältnis zu (A) im etwa 1,2- bis 2,5-fachen stöchiometrischen Überschuß vorliegt.

15. Verwendung nach mindestens einem der vorstehenden Ansprüche, dadurch gekennzeichnet, daß die Reaktivkomponente (B) in einer Harzkomponente (A), die einem der Ansprüche 1 bis 15 entspricht, feinverteilt dispergiert sind.

16. Verwendung, dadurch gekennzeichnet, daß die Dispersion neben 100 Teilen einer 60 %igen PU-Dispersion nach mindestens einem der vorangegangenen Ansprüche noch bis zu 60 Teilen einer 50 %igen wäßrigen Dispersion auf der Basis von Acrylsäureestercopolymerisat enthält.

17. Verwendung der Dispersionen nach mindestens einem der Ansprüche 1 bis 16 als Primer für PVC-Gegenstände, insbesondere Profile.

18. Verwendung nach Anspruch 17 zum Kaschieren von Folien aus PVC, PES, Polyolefinen und Polymethacrylaten auf den Kunststoffgegenständen.

19. Verwendung nach Anspruch 17 oder 18 beim Verkleben von Kunststoffgegenständen mit Folien, wobei der Klebstoff ein Polyurethan-Schmelzklebstoff ist.

## Claims

1. The use of an aqueous dispersion in which at least 20% by weight of the polymer content emanates from an aqueous dispersion of OH-functional polyurethane prepolymers obtainable by reaction of
- a polyol component containing polyester polyols (I) and
- compounds containing groups capable of salt formation and at least two isocyanate-reactive groups (II) with
- an isocyanate component consisting of at least 20% by weight of tetramethyl xylylene diisocyanate (TMXDI) (III) in a stoichiometric excess,
subsequent dispersion in water and at least partial reaction of the remaining NCO groups with aminoalcohols (IV) and, optionally, subsequent chain extension,
as a polyurethane primer for bonding plastics.

2. The use claimed in claim 1, characterized in that the polyester polyols present in polyol component (I) are based on adipic acid and/or phthalic acid as the acid component.

3. The use claimed in at least one of the preceding claims, characterized in that the polyester polyols used for the production of the polyurethane prepolymers have a number average molecular weight in the range from 300 to 5,000.

4. The use claimed in at least one of the preceding claims, characterized in that (II) consists at least predominantly of dimethylol propionic acid (DMPA).

5. The use claimed in at least one of the preceding claims, characterized in that the isocyanate component (III) contains at least 30% by weight of TMXDI.

6. The use claimed in at least one of the preceding claims, characterized in that it has a low solvent content

7. The use claimed in at least one of the preceding claims, characterized in that, in the reaction of (I) and (II) with (III), the NCO:OH addition ratio is 2.0:1 or lower, but greater than 1:1.

8. The use claimed in at least one of the preceding claims, characterized in that (IV) consists of monoaminoalcohols.

9. The use claimed in at least one of the preceding claims, characterized in that the content of (II) in the polyurethane prepolymers is 1 to 13% by weight, based on the solids content.

10. The use claimed in at least one of the preceding claims, characterized in that, in the reaction of the NCO groups with the aminoalcohols (IV), the NCO:NHR addition ratio is in the range from 1:1 to 1:0.1.

11. The use claimed in at least one of the preceding claims, characterized in that the chain-extending step is carried out with water and/or polyamines.

12. The use claimed in at least one of the preceding claims, characterized in that, to form a two-component reactive system, polyfunctional compounds which are capable of reacting off with the functional groups of the OH-functional polyurethane prepolymers of reactive component (A) defined in the preceding claims are present as reactive component (B).

13. The use claimed in at least one of the preceding claims, characterized in that the isocyanates consist at least predominantly of HDI polyisocyanurates and/or HDI biuret isocyanates.

14. The use claimed in at least one of the preceding claims, characterized in that (B) is present in a stoichiometric excess of about 1.2 to 2.5-fold over (A).

15. The use claimed in at least one of the preceding claims, characterized in that reactive component (B) is finely dispersed in a resin component (A) corresponding to any of claims 1 to 15.

16. The claimed use, characterized in that, in addition to 100 parts of a 60% PU dispersion according to at least one of the preceding claims, the dispersion contains up to 60 parts of a 50% aqueous dispersion based on acrylate copolymer.

17. The use of the dispersions claimed in at least one of claims 1 to 16 as primers for articles, especially profiles, of PVC.

18. The use claimed in claim 17 for laminating films of PVC, PES, polyolefins and polymethacrylates onto the plastic articles.

19. The use claimed in claim 17 or 18 for bonding plastic articles with films, the adhesive being a polyurethane hotmelt adhesive.

## Revendications

1. Utilisation d'une dispersion aqueuse où au moins 20 % en poids de la teneur en polymère provient d'une dispersion aqueuse de prépolymères de polyuréthanne à OH fonctionnels qu'on peut préparer par réaction
• d'un composant polyol (I) contenant des polyesterpolyols et
• des composés au moins doublement réactifs vis-à-vis des isocyanates avec des groupes (II) pouvant former des sels avec
• un composant isocyanate (III) constitué d'au moins 20 % en poids de tétraméthylxylylènediisocyanate (TMXDI) en excès stoechiométrique
• ensuite dispersion dans l'eau et
• au moins réaction partielle des groupes NCO restant avec des amino-alcools (IV) ainsi que
• si c'est souhaité, prolongation consécutive de chaîne,
comme primaire de polyuréthanne pour coller des matières plastiques.

2. Utilisation selon la revendication 1,
caractérisée en ce que
les polyesterpolyols compris dans le composant polyol (I) comprennent comme composant acide de l'acide adipique et/ou de l'acide phtalique.

3. Utilisation selon au moins l'une des revendications précédentes,
caractérisée en ce que
les polyesterpolyols utilisés pour préparer les prépolymères de polyuréthanne présentent un poids moléculaire moyen en nombre de 300 à 5000.

4. Utilisation selon au moins l'une des revendications précédentes,
caractérisée en ce que
(II) est constitué au moins en majorité d'acide diméthylolpropionique (DMPA).

5. Utilisation selon au moins l'une des revendications précédentes,
caractérisée en ce que
le composant isocyanate (III) représente au moins 30 % en poids.

6. Utilisation selon au moins l'une des revendications précédentes,
caractérisée en ce qu'
il est pauvre en solvant.

7. Utilisation selon au moins l'une des revendications précédentes,
caractérisée en ce que
lors de la réaction de (I) et de (II) avec (III), le rapport d'addition NOC/OH est égal ou inférieur à 2,0, mais est cependant supérieur à 1.

8. Utilisation selon au moins l'une des revendications précédentes,
caractérisée en ce que
(IV) est constitué de monoaminoalcools.

9. Utilisation selon au moins l'une des revendications précédentes,
caractérisée en ce que
la teneur en (II) dans les prépolymères de polyuréthanne représente 1 à 13 % en poids, par rapport à la teneur en corps solide.

10. Utilisation selon au moins l'une des revendications précédentes,
caractérisée en ce que
lors de la réaction des groupes NCO avec les aminoalcools (IV), le rapport d'addition NCO/NHR se situe dans l'intervalle de 1:1 à 1:0,1.

11. Utilisation selon au moins l'une des revendications précédentes,
caractérisée en ce qu'
une prolongation de chaîne a lieu à l'aide de l'eau et/ou au moyen de polyamines.

12. Utilisation selon au moins l'une des revendications précédentes,
caractérisée en ce que
pour former un système réactif à deux composants, sont présents, comme composant réactif (B), des composés polyfonctionnels, qui peuvent réagir avec les groupes fonctionnels des prépolymères de polyuréthanne à fonctions OH définis aux revendications précédentes du composant réactif (A).

13. Utilisation selon au moins l'une des revendications précédentes,
caractérisée en ce que
les isocyanates sont constitués au moins en majorité de HDI-polyisocyanurates et/ou de HDI -biuret-isocyanates.

14. Utilisation selon au moins l'une des revendications précédentes,
caractérisée en ce que
(B) par rapport à (A) est en excès stoechiométrique d'environ 1,2 à 2,5 fois.

15. Utilisation selon au moins l'une des revendications précédentes,
caractérisée en ce que
le composant réactif (B) est finement dispersé dans un composant de résine (A), qui correspond à l'une des revendications 1 à 15.

16. Utilisation,
caractérisée en ce que
la dispersion, outre 100 parties d'une dispersion de PU à 60 %, contient, selon au moins l'une des revendications précédentes, en outre jusqu'à 60 parties d'une dispersion aqueuse à 50 % à base de copolymère d'esters d'acide acrylique.

17. Utilisation des dispersions selon au moins l'une des revendications 1 à 16,
comme primaire pour des objets en PVC, notamment des profilés.

18. Utilisation selon la revendication 17,
pour coller des films de PVC, PES, polyoléfines et polyméthacrylates sur des objets en matières plastiques.

19. Utilisation selon la revendication 17 ou 18,
pour coller des objets en matière plastique avec des films ou l'adhésif est un adhésif thermofusible de polyuréthanne.
